# EUROPÄISCHE PATENTSCHRIFT

(11) **EP 2 923 103 B1**
(45) Veröffentlichungstag und Bekanntmachung des Hinweises auf die Patenterteilung: **13.07.2016**
(21) Anmeldenummer: 13817862.9
(22) Anmeldetag: 04.11.2013
(51) Int. Cl.: F16D 48/06

(54) **VERFAHREN ZUR BESTIMMUNG UND/ODER ANSTEUERUNG EINER POSITION EINES ELEKTROMOTORS**
METHOD FOR DETERMINING AND/OR CONTROLLING A POSITION OF AN ELECTRIC MOTOR
PROCÉDÉ DE DÉTERMINATION ET/OU DE COMMANDE DE LA POSITION D'UN MOTEUR ÉLECTRIQUE

(30) Priorität: 22.11.2012 DE 102012221372; 19.12.2012 DE 102012223738
(43) Veröffentlichungstag der Anmeldung: 30.09.2015
(73) Patentinhaber: Schaeffler Technologies AG & Co. KG, 91074 Herzogenaurach (DE)
(72) Erfinder: DIETRICH, Markus, 77704 Oberkirch (DE)
(86) Internationale Anmeldenummer: PCT/DE2013/200268
(87) Internationale Veröffentlichungsnummer: WO 2014/079435

(56) Entgegenhaltungen:
- WO-A1-2011/044874
- DE-A1-102006 022 858
- DE-A1-102009 053 693

## Beschreibung

Die Erfindung betrifft ein Verfahren zur Bestimmung und/oder Ansteuerung einer Position eines Elektromotors, insbesondere in einem Kupplungsbetätigungssystem eines Kraftfahrzeuges, bei welchem die Position eines Rotors des Elektromotors von einer außerhalb einer Drehachse des Elektromotors an einem Stator des Elektromotors angeordneten Sensorik abgenommen wird, wobei das von der Sensorik abgenommene Positionssignal von einer Auswerteeinheit ausgewertet wird.

WO 2011/044874 wird als nächstliegender Stand der Technik gegenüber dem Gegenstand des Anspruchs 1 angesehen. Es offenbart eine Kupplungseinrichtung und ein Verfahren zur Ansteuerung der Position eines Elektromotors in einem Kupplungsbetätigungssystem eines Kraftfahrzeuges.

In modernen Kraftfahrzeugen, insbesondere Personenkraftwagen, werden zunehmend automatisierte Kupplungen eingesetzt, wie sie in der DE 10 2011 014 936 A1 beschrieben sind. Der Einsatz solcher Kupplungen hat den Vorteil des verbesserten Fahrkomforts und führt dazu, dass häufiger in Gängen mit langer Übersetzung gefahren werden kann. Die dabei verwendeten Kupplungen sind in hydraulischen Kupplungssystemen eingesetzt, bei welchen ein elektrohydraulischer Aktor, der von einem elektrisch kommutierten Motor angetrieben wird, über eine Hydraulikleitung mit der Kupplung verbunden ist.

Insbesondere bei Elektromotoren, bei welchen die Sensoren außerhalb der Drehachse des Elektromotors angeordnet sind, ist eine hohe Positionsauflösung notwendig. Dabei ist ein Magnetgeberring drehfest mit dem Rotor des Elektromotors, beispielsweise an einem Wellenende, verbunden (on-axis), während die Sensorik, die den Magnetgeberring sensiert, beispielsweise am Stator befestigt ist (off-axis). Die Sensorik bleibt in ihrer Position unverändert. Der Rotor des Elektromotors weist eine begrenzte Anzahl von Pol-Paaren auf, aus welchen eine vorgegebene Anzahl von Flanken der Magnetfeldschalter zur Positionsbestimmung genutzt werden.

Es ist bekannt, dass bei kleinen Durchmessern des Magnetgeberringes, der an dem Rotor angeordnet ist, in der Praxis ein zweipoliger Magnet als Kreisring eingesetzt wird, weshalb die Position des Rotors durch die Auswerteeinheit zuverlässig auf 360° elektrisch aufgelöst werden kann. In Bezug auf den Durchmesser des Magnetgeberringes ist dieser jedoch begrenzt, da die Krümmung des Magnetfeldes über dem Pol-Paar nicht immer ausreicht, um eine genügende Auflösung des von den Sensoren abgegebenen Sensorsignals zu erhalten.

Auch der Einsatz mehrerer Sensoren ist bekannt, wobei in der Praxis beispielsweise 5 Sensoren (3 Schalt-Hall-Sensoren und 2 Analog - Hall-Sensoren) eingesetzt werden. Dies erfordert jedoch einen nennenswerten Bauraum in der Kupplung und ist eine kostenaufwändige Lösung.

Der Erfindung liegt somit die Aufgabe zugrunde, ein Verfahren zur Bestimmung und/oder Ansteuerung einer Position eines Elektromotors, insbesondere in einem Kupplungsbetätigungssystem anzugeben, bei welcher trotz eines einfachen Aufbaus die Rotorpositionserfassung mit einem hohen Sicherheitsniveau erfolgt.

Erfindungsgemäß wird die Aufgabe dadurch gelöst, dass das Positionssignal in Abhängigkeit von einer Übertragungsentfernung zwischen Sensorik und Auswerteeinheit bei kurzen Übertragungsentfernungen mittels eines SPI-Protokoll-Signals und/oder bei längeren Übertragungsentfernungen mittels eines PWM-Signals zur Auswerteeinheit übertragen wird. Dies hat den Vorteil, dass das Positionssignal über ein Digitalsignal übertragen wird. Da das SPI-Protokoll-Signal zwar hochgenau aber auch störanfällig ist, wird bei längeren Übertragungsentfernungen das Positionssignal mittels eines PWM-Signals übertragen. Somit lässt sich bei Einsatz von nur einem Sensorsystem in Abhängigkeit von den gegebenen Einbauverhältnissen in der automatisierten Kupplung entscheiden, welche Übertragungsart gewählt wird. Dies ist insbesondere dann sehr kostengünstig, wenn ein Mikroprozessor in der Auswerteeinheit verwendet wird, welcher sowohl die Auswertung eines SPI-Protokoll-Signals als auch die Auswertung eines PWM-Signals zulässt, weshalb nur ein elektrischer Baustein benötigt wird, um beiden Bedingungen gerecht zu werden.

Vorteilhafterweise wird beim Start des Elektromotors eine Absolutposition des Elektromotors über das SPI-Protokoll-Signal oder das PWM-Signal von der Sensorik zu der Auswerteeinheit übertragen, wobei anschließend eine Bestromung des Elektromotors über eine aus einer Inkrementalposition des Rotors abgeleiteten Kommutierung durch die Auswerteeinheit erfolgt. Die Übertragung der Absolutposition des Rotors über das SPI-Protokoll-Signal bzw. das PWM-Signal erfolgt dabei in beiden Fällen hochgenau. Ist diese Absolutposition einmal ermittelt, wird die für die Motorkommutierung notwendige Positionsinformation über eine Inkrementalschnittstelle übertragen, bei welcher die von der Sensorik ausgegebenen Flanken, die durch den Polwechsel des rotierenden Magnetgeberringes verursacht werden, gezählt werden. Eine solche Vorgehensweise beinhaltet eine kurze Signallaufzeit und ist sehr genau.

In einer Ausgestaltung wird zur Übertragung der Absolutposition eines Pol-Paares des Rotors des Elektromotors ein Puls-Pausen-Verhältnis des PWM-Signals ausgewertet. Das PWM-Signal ist gegenüber externen Störeinflüssen, insbesondere bei einer größeren Entfernung zwischen Sensorik und Auswerteeinheit, unempfindlich und erlaubt eine genaue Bestimmung der Absolutposition durch die Auswertung des Puls-Pausen-Verhältnisses in der Auswerteeinheit.

In einer Variante wird ein Abgleich zwischen einer, von der Auswerteeinheit errechneten Inkrementalposition des Rotors und der Absolutposition des Pol-Paares durchgeführt. Dieser Abgleich dient zur Erhöhung des Vertrauens in die gerechnete Positionsinformation bzw. zur Erkennung von Übertragungsfehlern bzw. Rechenfehlern. Durch den Vergleich von Absolutposition und Inkrementalposition ist eine Plausibilisierung des Positionssignals zuverlässig möglich.

Vorteilhafterweise wird der Abgleich zyklisch durchgeführt, so dass während des Betriebes des Elektromotors immer sichergestellt ist, dass die kommutierte Ansteuerung des Elektromotors auch zum richtigen Zeitpunkt erfolgt.

In einer Weiterbildung wird zur Ermittlung der Position des Rotors ein an dem Rotor des Elektromotors befestigter Magnetgeberring mit einem kleinen Durchmesser verwendet, welcher nur ein Pol-Paar aufweist. Die Verwendung des kleinen Magnetgeberringes mit zwei diametral-magnetischen Polen lässt die Auswertung nur einer elektrischen Periode zuverlässig zu.

Alternativ wird zur Ermittlung der Position des Rotors der an dem Rotor des Elektromotors befestigte Magnetgeberring mit einem größeren Durchmesser und mehreren Pol-Paaren verwendet, bei welchem die Anzahl der Pol-Paare des Magnetgeberringes gleich der Anzahl der Pol-Paare des Rotors sind. Dadurch wird sichergestellt, dass das von der Sensorik abgegebene Sensorsignal immer innerhalb einer elektrischen Periode eindeutig ist. Ein solches Sensorsignal ist für die Positionsinformation für die Motorkommutierung nutzbar, da es absolut über 360° elektrisch nutzbar ist.

Die Erfindung lässt zahlreiche Ausführungsformen zu. Zwei davon sollen anhand der in der Zeichnung dargestellten Figuren näher erläutert werden.

Es zeigen:
- Figur 1:: eine vereinfachte Darstellung eines Kupplungsbetätigungssystems zur Betätigung einer automatisierten Reibungskupplung,
- Figur 2:: schematische Darstellung einer Übertragung eines Ausgangssignals der Sensorik zu einer Auswerteeinheit,
- Figur 3:: ein an einem Rotor befestigter Magnetgeberring mit mehreren Polpaaren,
- Figur 4:: ein erstes Ausführungsbeispiel für einen Magnetgeberring mit einem ersten Ringdurchmesser,
- Figur 5:: ein zweites Ausführungsbeispiel für einen Magnetgeberring mit einem zweiten Ringdurchmesser.

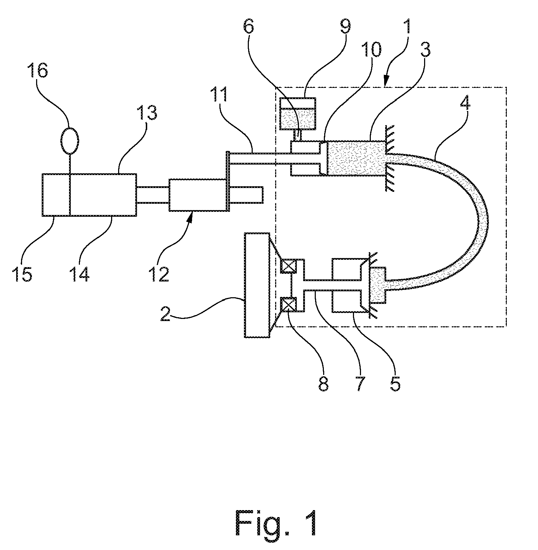

.In Figur 1 ist ein Kupplungsbetätigungssystem 1 für eine automatisierte Kupplung vereinfacht dargestellt. Das Kupplungsbetätigungssystem 1 ist in einem Antriebsstrang eines Kraftfahrzeuges einer Reibungskupplung 2 zugeordnet und umfasst einen Geberzylinder 3, der über eine auch als Druckleitung bezeichnete Hydraulikleitung 4 mit einem Nehmerzylinder 5 verbunden ist. In dem Nehmerzylinder 5 ist ein Nehmerkolben 6 axial bewegbar, der über ein Betätigungsorgan 7 und unter Zwischenschaltung eines Ausrücklagers 8 die Reibungskupplung 2 betätigt. Der Geberzylinder 3 ist über eine Verbindungsöffnung mit einem Ausgleichsbehälter 9 verbindbar. In dem Geberzylinder 3 ist ein Geberkolben 10 bewegbar. Von dem Geberkolben 10 geht eine Kolbenstange 11 aus, die in Längsrichtung zusammen mit dem Geberkolben 10 translatorisch bewegbar ist. Die Kolbenstange 11 des Geberzylinders 3 ist über eine Gewindespindel 12 mit einem elektromotorischen Stellantrieb 13 gekoppelt. Der elektromotorische Stellantrieb 13 umfasst einen als kommutierten Gleichstrommotor ausgebildeten Elektromotor 14 und eine Auswerteeinheit 15. Die Gewindespindel 12 setzt eine Drehbewegung des Elektromotors 14 in eine Längsbewegung der Kolbenstange 11 bzw. des Geberzylinderkolbens 10 um. Die Reibungskupplung 2 wird durch den Elektromotor 14, die Gewindespindel 12, den Geberzylinder 3 und den Nehmerzylinder 5 automatisiert betätigt.

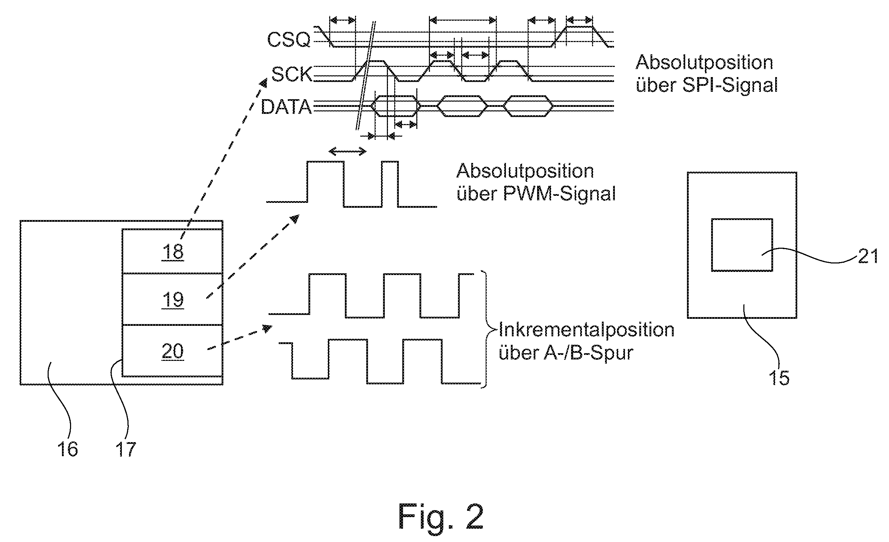

An oder in dem elektromotorischen Stellantrieb 13 ist eine Sensorik 16 integriert, wie sie in Figur 2 dargestellt ist. Dabei ist die Sensorik 16 räumlich von der Auswerteeinheit 15 getrennt.

So kann die Sensorik 16 beispielsweise in einer Getriebeglocke angeordnet sein, während die Auswerteeinheit 15 außerhalb der Getriebeglocke positioniert ist. Innerhalb der Sensorik 16 ist eine Signalaufbereitungsschaltung 17 angeordnet, welche eine SPI-Schnittstelle 18 und/oder eine PWM-Schnittstelle 19 aufweist. Weiterhin umfasst die Signalaufbereitungsschaltung 17 eine Inkrementalschnittstelle 20.

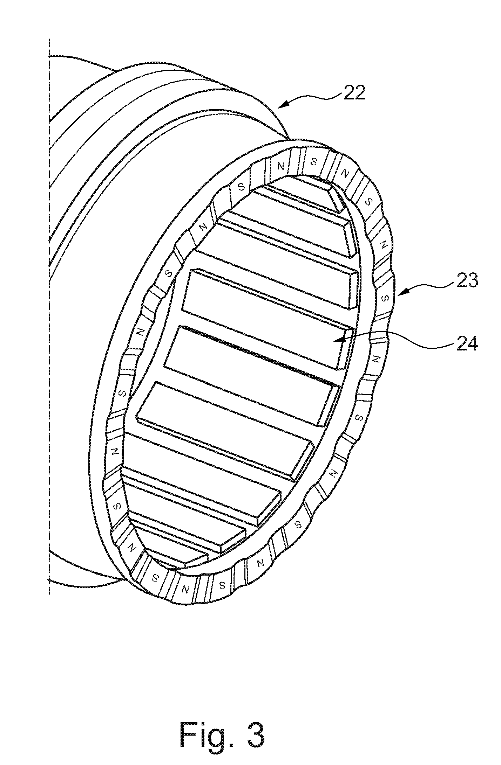

Figur 3 zeigt einen Rotor 22 des Elektromotors 14, der als Hohlwelle ausgebildet ist. Der Rotor 22 des nicht weiter dargestellten kommutierten Elektromotors 14 weist an einer, der an einem nicht weiter dargestellten Stator positionierten Sensorik 16 zugewandten Frontseite einen Magnetgeberring 23 auf, welcher eine vorgegebene Anzahl von Magnetpolen N,S umfasst. Innerhalb des Rotors 23 sind Rotormagnete 24 befestigt, wobei die Rotormagnete 24 die gleiche Anzahl von Pol-Paaren N, S wie der Magnetgeberring 23 aufweist. Dabei wird ein Pol-Paar N, S von zwei Magnetpolen N, S gebildet, deren Magnetisierungsrichtung in entgegen gesetzter Richtung verläuft. Ein solches off-axis-Sensorsystem arbeitet mit sehr hoher Auflösung bzw. Genauigkeit und kann eine schnelle und sichere Datenübertragung durch den Einsatz von einer Standardsensorik ermöglichen.

Beim Einschalten des Elektromotors 14 wird zunächst die Absolutposition des Rotors 22 des Elektromotors 14 bestimmt. Dabei wird die in einem Pol-Paar N,S sensierte absolute Position über die PWM-Schnittstelle 19 bzw. die SPI-Schnittstelle 18 übertragen. Die Auswahl zwischen der SPI-Schnittstelle 18 und der PWM-Schnittstelle 19 erfolgt dabei in Abhängigkeit der Entfernung zwischen Sensorik 16 und Auswerteeinheit 15. Die Nutzung des digitalen SPI-Protokoll-Signals zur Übertragung der Absolutposition des Rotors 22 erfolgt immer dann, wenn nur kurze Übertragungswege zwischen dem Sensorik 16 und der Auswerteeinheit 15 zu überwinden sind. Ist der Abstand zwischen Sensorik 16 und der Auswerteeinheit 15 aber größer, wird die Absolutposition über das digitale PWM-Signal übertragen. Ein solches PWM-Signal besitzt den Vorteil der Unempfindlichkeit gegenüber Störungen, die auf das Ausgangssignal der Sensorik 16 auf dem Übertragungsweg einwirken. Vorteilhafterweise wird die Absolutposition aus dem Puls-Pausen-Verhältnis des PWM-Signals durch die Auswerteeinheit 15 ermittelt.

Ist die Absolutposition in der elektrischen Periode nun bekannt, beginnt die Bestromung bzw. Ansteuerung des Elektromotors 14. Ab diesem Zeitpunkt wird die Rotorposition mit einer Inkrementalinformation übertragen, die über die Inkrementalschnittstelle 20 der Sensorik 16 ausgegeben wird. Innerhalb der Auswerteeinheit 15 wird aus der Inkrementalinformation die auf der Absolutposition eines Pol-Paares aufbauende Position des Rotors 22 des Elektromotors 14 berechnet. Im vorliegenden Beispiel wird ein schneller Inkrementalgeber, beispielsweise ein GMR-Sensor für die Positionserfassung des Rotors 22 in der Sensorik 16 genutzt. Das Ausgangssignal der Inkrementalschnittstelle 20 der Sensorik 16 wird vorzugsweise über eine A-/B-Signalspur übertragen. Die Signalspuren A, B sind um 90° elektrisch gegeneinander phasenverschoben, was einem halben Puls entspricht. Die Verwendung dieser beiden Signalspuren hat den Vorteil, dass Störungen im Signalübertragungspfad vermieden werden bzw. bei auftretenden Störungen eine Plausibilisierung des Ausgangssignals der Sensorik 16 möglich ist. Darüber hinaus lässt sich so die Bewegungsrichtung des Rotors 22 einfach detektieren. Die über die A-/B-Spur übertragene Inkrementalposition des Rotors 22 wird ebenfalls in der Auswerteeinheit 15 direkt an die Interrupt-Eingänge eines Mikroprozessors 21 eingelesen, welcher in der Auswerteeinheit 15 positioniert ist und der die Flanken des Ausgangssignals jeder Signalspur A,B zählt. Jeder x-te Interrupt löst eine Blockkommutierung aus, wobei die Anzahl der Interrupts abhängig von der Anzahl an Pulsen ist, die die Sensorik 16 pro Kommutierungsschritt liefert.

Um das Vertrauen in die gerechnete Positionsinformation zu erhöhen bzw. eventuelle Übertragungs- und/oder Rechenfehler zu erkennen, wird zyklisch ein Abgleich der in der Auswerteeinheit 15 berechneten Inkrementalposition des Rotors 22 zu der im Pol-Paar absoluten Position des Elektromotors 14 durchgeführt, wie sie zu Beginn des Betriebes des Elektromotors 14 ermittelt wurde.

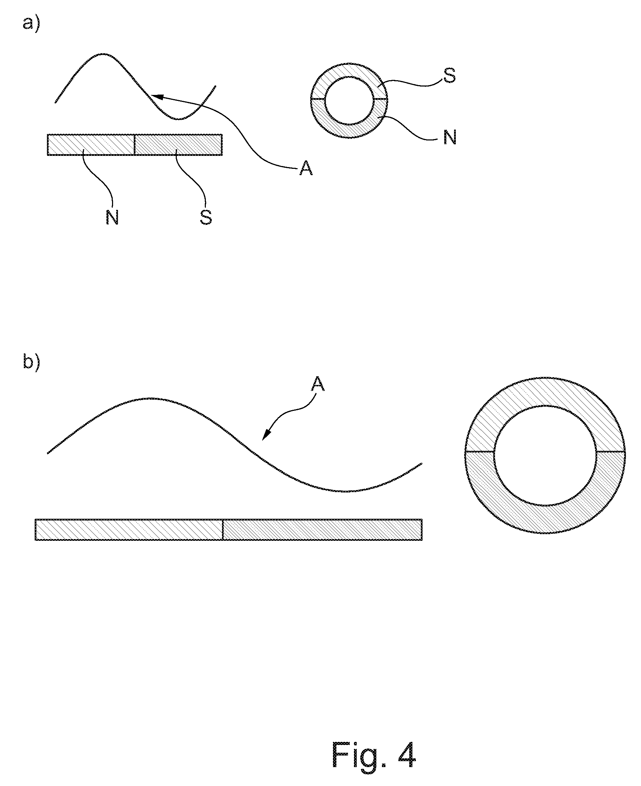

Für das vorgeschlagene Verfahren ist es von Bedeutung, dass das von der Sensorik 16 ausgegebene Ausgangsignal A immer innerhalb einer elektrischen Periode eindeutig ist. Um dies zu realisieren, werden zwei Möglichkeiten vorgeschlagen. In Figur 4 ist der Magnetgeberring 23 mit einem kleinen Ringdurchmesser dargestellt. Ein solcher Magnetgeberring 23 ist auch als diametral-magnetische Tablette bekannt und besitzt nur ein Pol-Paar, bestehend aus einem Südpol S und einem Nordpol N (Figur 4a). Der in der Sensorik 16 enthaltene GMR-Sensor liefert über dieses eine Pol-Paar ein über 360° elektrisch ein eindeutiges Signal. Dies ist insbesondere an dem Signalverlauf des von der Sensorik ausgegebenen Ausgangssignals A zu erkennen, welches eine ausreichend markante Steigung aufweist, die gut auszuwerten ist. Wird der Durchmesser des Magnetgeberringes 23 aber vergrößert, so ergibt sich bei der Verwendung nur eines Pol-Paares ein Verlauf des Ausgangsignals A der Sensorik 16, welches eine abgeflachte Signalsteigung aufweist, welche durch die Auswerteeinheit 15 nicht genau genug auswertbar ist (Figur 4b).

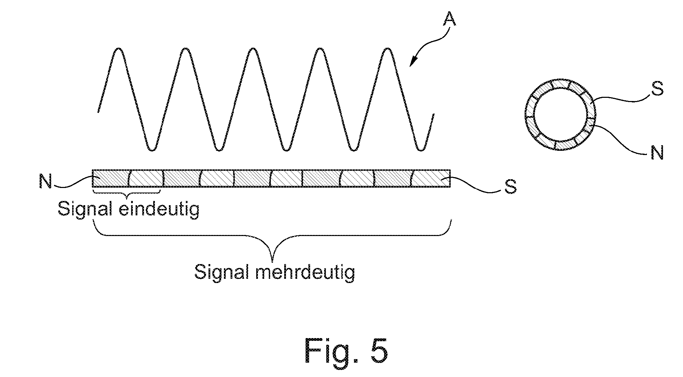

Wird der Durchmesser des Magnetgeberringes 23, wie in Figur 5 dargestellt, vergrößert und sind mehrere Pol-Paare alternierend über den Magnetgeberring 23 verteilt, wird gewährleistet, dass auch bei einem solchen Mehrpolsensor das Ausgangssignal A der Sensorik 16 innerhalb einer elektrischen Periode von 360° eindeutig bleibt, wenn der Magnetgeberring 23 genauso viele Pol-Paare aufweist, wie der Rotor 22.

Aufgrund der gemachten Erläuterungen wird ein off-axis-Sensorsystem vorgestellt, das kurze Signallaufzeiten aufweist, um Positionsinformationen für die Kommutierung des Elektromotors 14 zu nutzen. Gleichzeitig ist das Ausgangssignal A der Sensorik 16 über 360° elektrisch eindeutig. Durch die Verwendung eines PWM-Signals zur Bestimmung der Absolutposition, insbesondere der Auswertung des Puls-Pausen-Verhältnisses dieses PWM-Signals, ist eine genaue Bestimmung der Absolutposition des Elektromotors 14 bei dessen Start möglich, Gleichzeitig wird eine störsichere Übertragung zwischen Sensorik 16 und Auswerteinheit 15 gegenüber von externen Störsignalen realisiert. Darüber hinaus ist die Plausibilisierung der errechneten Inkrementalposition zur Absolutposition in einem Pol-Paar jederzeit möglich. Somit wird ein off-axis-Elektromotor vorgestellt, welcher einfach aufzubauen ist und dessen Rotorpositionserfassung mit einem hohen Sicherheitsniveau erfolgt.

### Bezugszeichenliste

- 1: Kupplungsbetätigungssystem
- 2: Reibungskupplung
- 3: Geberzylinder
- 4: Hydraulikleitung
- 5: Nehmerzylinder
- 6: Nehmerkolben
- 7: Betätigungsorgan
- 8: Ausrücklager
- 9: Ausgleichsbehälter
- 10: Geberkolben
- 11: Kolbenstange
- 12: Gewindespindel
- 13: Stellantrieb
- 14: Elektromotor
- 15: Auswerteeinheit
- 16: Sensorik
- 17: Signalaufbereitungsschaltung
- 18: SPI-Schnittstelle
- 19: PWM-Schnittstelle
- 20: Inkrementalschnittstelle
- 21: Mikroprozessor
- 22: Rotor
- 23: Magnetgeberring
- 24: Rotormagnet
- N: Nordpol
- S: Südpol
- A: Ausgangssignal

## Patentansprüche

1. Verfahren zur Bestimmung und/oder Ansteuerung einer Position eines Elektromotors, insbesondere in einem Kupplungsbetätigungssystem eines Kraftfahrzeuges, bei welchem die Position eines Rotors (22) des Elektromotors (14) von einer, außerhalb einer Drehachse des Elektromotors (14) an einem Stator des Elektromotors (14) angeordneten Sensorik (16) abgenommen wird, wobei das von der Sensorik (16) abgenommene Positionssignal (A) von einer Auswerteeinheit (15) ausgewertet wird, **dadurch gekennzeichnet, dass** das Positionssignal in Abhängigkeit von einer Übertragungsentfernung zwischen Sensorik (16) und Auswerteeinheit (15) bei kurzen Übertragungsentfernungen mittels eines SPI-Protokoll-Signals und/oder bei längeren Übertragungsentfernungen mittels eines PWM-Signals übertragen wird.

2. Verfahren nach Anspruch 1, **dadurch gekennzeichnet, dass** beim Start des Elektromotors (14) eine Absolutposition des Elektromotors (14) über das SPI-Protokoll-Signal oder das PWM-Signal von der Sensorik (16) zu der Auswerteeinheit (15) übertragen wird, wobei anschließend eine Bestromung des Elektromotors (14) über eine aus einer Inkrementalposition des Rotors (22) des Elektromotors (14) abgeleiteten Kommutierung durch die Auswerteeinheit (15) erfolgt.

3. Verfahren nach Anspruch 2, **dadurch gekennzeichnet, dass** zur Übertragung der Absolutposition eines Pol-Paares des Rotors (22) des Elektromotors (14) ein Puls-Pausen-Verhältnis des PWM-Signals ausgewertet wird.

4. Verfahren nach einem der Ansprüche 1, 2 oder 3, **dadurch gekennzeichnet, dass** ein Abgleich zwischen einer, von der Auswerteeinheit (15) errechneten Inkrementalposition des Rotors (22) und der Absolutposition des Pol-Paares durchgeführt wird.

5. Verfahren nach Anspruch 4, **dadurch gekennzeichnet, dass** der Abgleich zyklisch durchgeführt wird.

6. Verfahren nach mindestens einem der vorhergehenden Ansprüche, **dadurch gekennzeichnet, dass** zur Ermittlung der Position des Rotors (22) ein, an dem Rotor (22) des Elektromotors (14) befestigter Magnetgeberring (23) mit einem kleinen Durchmesser verwendet wird, welcher nur ein Pol-Paar aufweist.

7. Verfahren nach mindestens einem der vorhergehenden Ansprüche 1 bis 5, **dadurch gekennzeichnet, dass** zur Ermittlung der Position des Rotors (22) der an dem Rotor (22) des Elektromotors (14) befestigte Magnetgeberring (23) mit einem größeren Durchmesser und mehreren Pol-Paaren verwendet wird, bei welchem die Anzahl der Pol-Paare des Magnetgeberrings (23) gleich der Anzahl der Pol-Paare des Rotors (22) ist.

## Claims

1. Method for determining and/or controlling a position of an electric motor, in particular in a clutch-actuation system of a motor vehicle, in which the position of a rotor (22) of the electric motor (14) is obtained from a sensor system (16) which is arranged on a stator of the electric motor (14), outside a rotational axis of the electric motor (14), wherein the position signal (A) which is obtained from the sensor system (16) is evaluated by an evaluation unit (15), **characterized in that** the position signal is transmitted as a function of a transmission distance between the sensor system (16) and the evaluation unit (15), by means of an SPI protocol signal in the case of short transmission distances and/or by means of a PWM signal in the case of relatively long transmission distances.

2. Method according to Claim 1, **characterized in that** when the electric motor (14) is started an absolute position of the electric motor (14) is transmitted to the evaluation unit (15) from the sensor system (16) by means of the SPI protocol signal or the PWM signal, wherein the electric motor (14) is subsequently energized by means of commutation, derived from an incremental position of the rotor (22) of the electric motor (14), by the evaluation unit (15).

3. Method according to Claim 2, **characterized in that** a pulse-interval ratio of the PWM signal is evaluated in order to transmit the absolute position of a pole pair of the rotor (22) of the electric motor (14).

4. Method according to one of Claims 1, 2 or 3, **characterized in that** a comparison is made between an incremental position of the rotor (22) which is calculated by the evaluation unit (15) and the absolute position of the pole pair.

5. Method according to Claim 4, **characterized in that** the comparison is carried out cyclically.

6. Method according to at least one of the preceding claims, **characterized in that** in order to determine the position of the rotor (22), a magnet encoder ring (23) which is attached to the rotor (22) of the electric motor (14), which has a small diameter and which has just one pole pair is used.

7. Method according to at least one of the preceding Claims 1 to 5, **characterized in that** in order to determine the position of the rotor (22), the magnet encoder ring (23) which is attached to the rotor (22) of the electric motor (14) and which has a relatively large diameter and a plurality of pole pairs is used, in which method the number of pole pairs of the magnetic encoder ring (23) is equal to the number of pole pairs of the rotor (22).

## Revendications

1. Procédé de détermination et/ou de commande d'une position d'un moteur électrique, notamment dans un système d'actionnement d'embrayage d'un véhicule automobile, selon lequel la position d'un rotor (22) du moteur électrique (14) est relevée par un système de détection (16) disposé à l'extérieur d'un axe de rotation du moteur électrique (14) sur un stator du moteur électrique (14), le signal de position (A) relevé par le système de détection (16) étant interprété par une unité d'interprétation (15), **caractérisé en ce que** le signal de position est transmis en fonction d'une distance de transmission entre le système de détection (16) et l'unité d'interprétation (15), au moyen d'un signal au protocole SPI dans le cas des distances de transmission courtes et/ou au moyen d'un signal PWM dans le cas des distances de transmission longues.

2. Procédé selon la revendication 1, **caractérisé en ce que** lors du démarrage du moteur électrique (14), une position absolue du moteur électrique (14) est transmise par le système de détection (16) à l'unité d'interprétation (15) par le biais du signal au protocole SPI ou du signal PWM, une mise sous tension du moteur électrique (14) étant ensuite effectuée par l'unité d'interprétation (15) par le biais d'une commutation dérivée d'une position incrémentale du rotor (22) du moteur électrique (14).

3. Procédé selon la revendication 2, **caractérisé en ce qu'**un rapport impulsions/pauses du signal PWM est interprété en vue de la transmission de la position absolue d'une paire de pôles du rotor (22) du moteur électrique (14).

4. Procédé selon l'une des revendications 1, 2 ou 3, **caractérisé en ce qu'**une comparaison entre une position incrémentale du rotor (22) calculée par l'unité d'interprétation (15) et la position absolue de la paire de pôles est réalisée.

5. Procédé selon la revendication 4, **caractérisé en ce que** la comparaison est réalisée de manière cyclique.

6. Procédé selon au moins l'une des revendications précédentes, **caractérisé en ce que** la détermination de la position du rotor (22) est effectuée en utilisant une bague de codeur magnétique (23) de petit diamètre fixée au rotor (22) du moteur électrique (14), laquelle ne possède qu'une seule paire de pôles.

7. Procédé selon au moins l'une des revendications 1 à 5, **caractérisé en ce que** la détermination de la position du rotor (22) est effectuée en utilisant la bague de codeur magnétique (23) ayant un diamètre plus grand et plusieurs paires de pôles fixée au rotor (22) du moteur électrique (14), procédé selon lequel le nombre de paires de pôles de la bague de codeur magnétique (23) est égal au nombre de paires de pôles du rotor (22).
